**Europäisches Patentamt**

(19) **European Patent Office**

**Office européen des brevets**

(11) Publication number : **0 512 702 A2**

(12) # EUROPEAN PATENT APPLICATION

(21) Application number : **92303437.5**

(22) Date of filing : **30.04.92**

(51) Int. Cl.⁵ : **G06F 15/21**

A request for addition of page 7 and cancellation of page 31 has been filed pursuant to Rule 88 EPC. A decision on the request will be taken during the proceedings before the Examining Division (Guidelines for Examination in the EPO, A-V, 2.2).

(30) Priority : **03.05.91 US 695593**

(43) Date of publication of application : **11.11.92 Bulletin 92/46**

(84) Designated Contracting States : **AT BE CH DE DK ES FR GB GR IT LI LU MC NL PT SE**

(71) Applicant : **REUTERS LIMITED**
**85 Fleet Street**
**London, EC4P 4AJ (GB)**

(72) Inventor : **Donner, William**
**29 Ridgecroft Road**
**Bronxville, New York 10708 (US)**
Inventor : **Scala, Timothy F.**
**52 Warfield Street**
**Upper Montclair, New York 07043 (US)**

(74) Representative : **Cline, Roger Ledlie et al**
**EDWARD EVANS & CO. Chancery House 53-64**
**Chancery Lane**
**London WC2A 1SD (GB)**

(54) **Automated currency trade matching system with integral credit checking.**

(57) An automated money market trading system is disclosed for matching bids and offers and for performing credit filtering and credit line checks of one or both counterparties to a trade. Each bid an offer is defined by changable parameters. The system has a central computer, a plurality of remote local computers coupled to the central computer, and plural terminals at banks coupled to the local bank computers for entering bids and offers and parameters. The central computer matches bids and offers based on the similarity or their parameter values. A credit file residing on the bank local computer, coupled to and accessible through a credit controller in the local bank computers and thereby accessibly by remote bank or trader terminals, contains confidential credit data. The local bank computer also has a credit filtering means for applying the accessed credit data to the bid to determine whether the source of the bid has sufficient credit. The filtered credit data is associated with the bid and offer and transmitted to the central computer which matches orders having similar parameters. Firm orders result in immediate consummation of a transaction, whereas soft orders require trader confirmation. Imperfect matches can result in executed trades if one of the parties is willing to alter its order. Soft orders can be matched to firm orders if the party making the soft order is willing to make its order firm. After the trade has been executed, it is posted to local computers of the bidder and the offeror for finalizing the transaction and updating the credit files. The system provides a variety of browsing and market analysis functions ; outstanding orders can be browsed without trading on the market and a variety of statistical calculation features are provided to give general information concerning the market.

FIG.1.

Jouve, 18, rue Saint-Denis, 75001 PARIS

The present invention generally relates to the field of automated trading systems.

Efficient, profitable trading in global currency, securities, commodity and money markets requires high-speed matching of transactions. In the past, consummating trades through matching of offers and bids or buy-/sell orders has been carried out manually by human market makers, through limited automated means or by telephonic network. Such automated trading systems are known for stocks and other securities, as exemplified by U.S. Patents Nos. 4,412,287 (Braddock, III) and 4,674,044 (Kalmus et al.). However, known automated trading systems are not suitable for safe, high-speed, profitable trading in the global money markets.

These markets include Federal Reserve Bank funds, domestic and eurocurrency markets and a variety of off-balance sheet instruments such as interest rate swaps, forward rate agreements, caps, floors and swaptions. Currently, trading of these instruments is not automated; the instruments are traded by international voice brokers who act as agents to match parties in money market transactions; parties are typically banks and large financial institutions. The operations are organized both regionally and globally and generally require separate telephone lines to communicate borrow/lend or buy/sell orders for each product, and can only deal with a limited number of products. As a result, transaction throughput is severely limited.

Unlike the securities markets, in the money markets, many transactions are cash deposits rather than sales. A bank's credit or currency exposure in such a market can be very large, often in hundreds of millions of dollars. Consequently, for parties to currency market transactions, credit checks are essential because of the large potential exposure.

Presently, credit checking is carried out by voice communication between institutional representatives and voice brokers, which is time-consuming and which requires human access to a large amount of confidential credit information, including credit ratings of banks and other large, credit- and image-sensitive institutions. Known automated trading systems are not equipped to handle credit checks before executing a transaction. In present cash markets, the time required with existing trading systems limits trading efficiency and inhibits some transactions. With conventional brokers, a credit check can take anywhere from thirty seconds to ten minutes before a trade can be executed.

Moreover, using current voice communication currency market trading systems, entry of buy and sell orders is slow, and the attributes of each order (instrument, order size, price, rate of return, etc.) must be vocally repeated for each new order. Such manual order entry reduces transaction throughput. Also, any desired record keeping of statistical analysis relating to trades must be maintained separate from the trade, causing duplication of effort.

GB-A-1489573 discloses a system for matching orders, including bids and offers, each order being defined by specific variable parameters, the system comprising:

a plurality of remote bank terminals for entering bids and offers and their respective parameters:

a plurality of local bank computers, each bank computer being coupled to a communication network, each bank terminal being coupled to one of the bank computers;

a central computer coupled to the communication network, the central computer including:

order matching means for matching corresponding orders based on the similarity of the parameter values; and

order broadcast means for communicating order parameters to the local bank computers using the communication network. This reference is concerned with standard commodity trading in which the source of the instrument is irrelevant after the transaction has taken place. The present invention provides a system for matching orders in which the source of the instrument may be a relevant factor and in particular the credit rating of potential sources of orders. For this purpose, the invention provides a system of the type set out above, that improved according to the characterizing feature of claim 1. The invention also includes a computer data processing method which improves on the method shown in the earlier specification by the characterizing feature of claim 10.

Credit databases are disclosed in EP-A-0411748, but they are located centrally, not at the remote locations of the bank computers.

In one embodiment, the invention provides an automated currency market trading system for matching bids and offers wherein each bid and each offer is defined by specific variable parameters. The system has a central computer, a plurality of remote local computers located at banks or other institutions and coupled to the central computer, and plural bank terminals coupled to the local bank computers for entering bids and offers and their respective parameters. The central computer matches bids and offers based on the similarity of their parameter values. A credit file residing on the bank local computer, coupled to and accessible through remote terminals of traders employed by or associated with the bank, contains confidential credit date. The local bank computer has a means for accessing a credit file to obtain credit data relating to the source of a bid or offer entered in the central computer. The local bank computer also has a filtering means for applying the accessed credit data to the bid/offer to determine whether the source of the bid/offer has sufficient credit. The filtered credit data is associated with the bid and offer and transmitted to the central computer which matches orders having similar parameters. If a match is found, firm orders result in immediate consummation of a transaction, whereas soft orders require trader confirmation. Imperfect matches can result in executed trades if one of the parties is willing to alter its order. Soft orders can be matched to firm orders if the party making the soft order is willing to make its order firm. After the trade has been executed, it is posted to local computers of the bidder and the offeror for finalizing the transaction and updating the credit files. The system provides a variety of browsing and market analysis functions; outstanding orders can be browsed without trading on the market and a variety of statistical calculation features are provided to give general information concerning the market.

With the present invention it is possible to cause verification of credit availability before the trade is executed. It is possible for both parties to the trade to remain anonymous until after both a match is made and credit availability is checked. Accordingly, firm transactions can be completed immediately upon acceptance of the price, amount and other pertinent criteria without waiting for a manual telephone connection between the brokers and the parties.

An example of the invention will now be described with reference to the accompanying drawings in which:

Fig. 1A is a block diagram of an automated trading system according to the present invention;

Fig.1B is a block diagram of the interconnection of the system of Fig.1A to credit data files.

Fig. 1C is a block diagram of logical data flow in a local bank computer of the system of Fig. 1A;

Fig. 2A is a flowchart showing a preferred bid and offer matching process;

Fig. 2B is a flowchart showing a failsafe feature of the invention;

Figs. 3A to 3E, 4A to 4B, 5A to 5E, 6 and 8 are diagrams showing terminal screen displays generated by the system of Fig. 1A; and

Fig.7 is a representation of a turndown report generated by the system of Fig. 1A.

than one local bank computer. The centers are responsible for administrative and operational support for a bank terminals located in their geographic region. For example, in the event of power failure or data loss at a local bank computer, the centers permit recovery of data on local bank computers. Data stored in the centers is used to reconstruct trading data relating to each trader of a bank, including each trader's book of completed trades.

A central administration center 22 is linked with the central computer for administrative and operational support which affects all traders.

Each remote terminal 16-1, 16-2 may comprise a personal computer or a VAX terminal known in the art, and includes a keyboard, a display screen which may be a 24 or 25 line by 80 character CRT display or X Terminal, or personal computer emulating either of the foregoing, a memory and a communication link to a local bank computer.

## C. System Operation

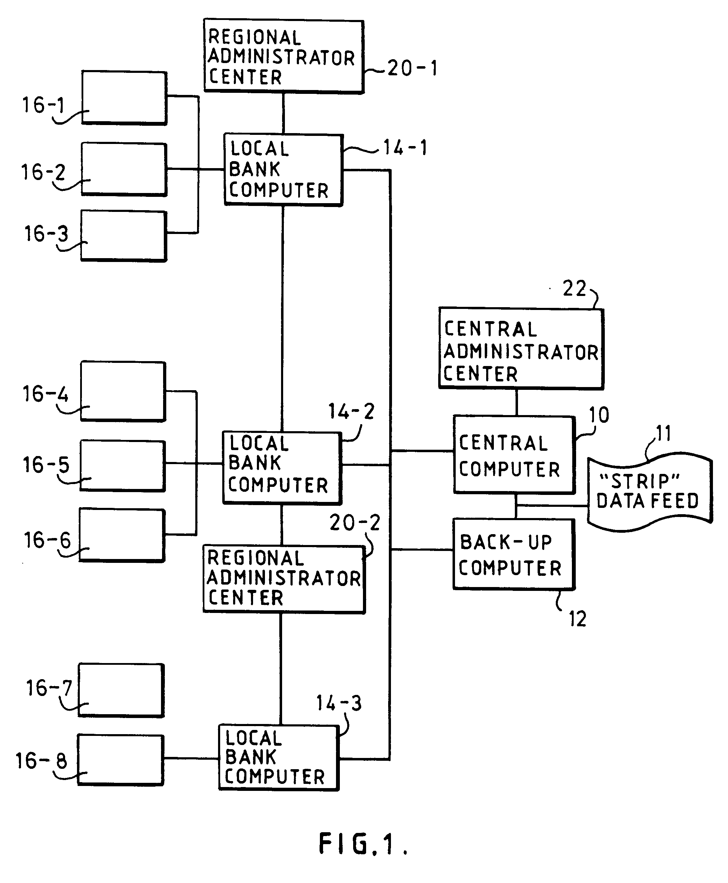

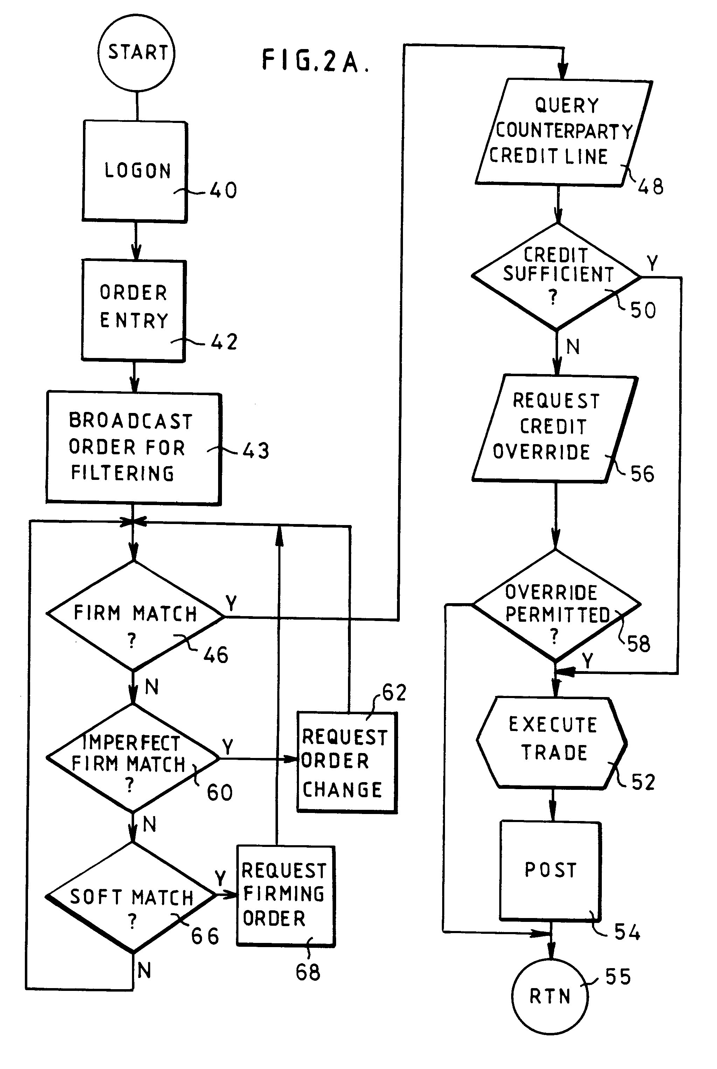

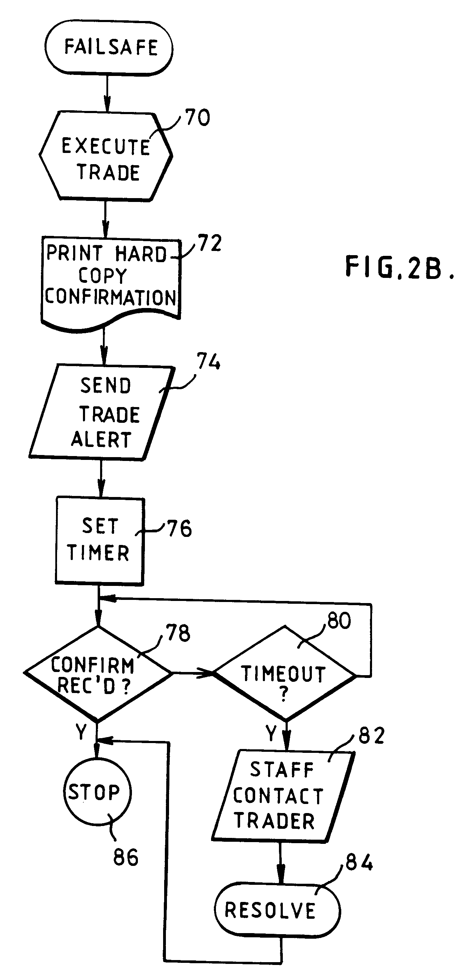

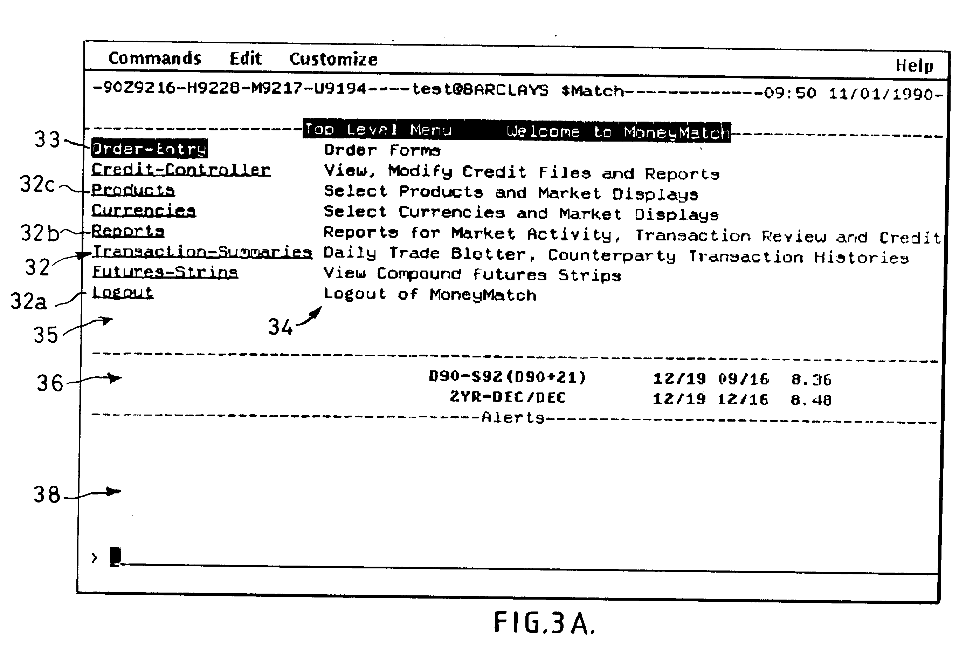

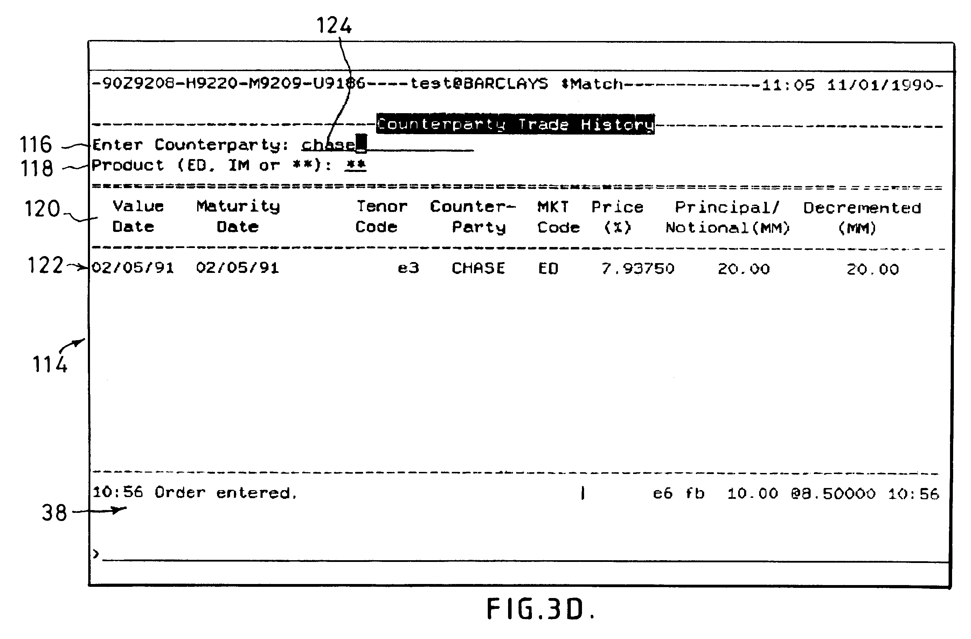

A general, high-level view of operation of the system of FIG. 1A is described below with reference to FIG. 2. Reference may also be made to the screen displays which appear in FIGs. 3A to 3E, 4A to 4B, and 5A to 5E, which illustrate specific functions of the system. Thus, it should be understand that FIG. 2 provides only a general illustration of system operation, and that each block of FIG. 2 includes many specific substeps.

To participate in the trading system, a trader first logs on at a bank terminal such as terminal 16-1 of FIG. 1A, as indicated in block 40 of FIG. 2. Each terminal is preferably dedicated either to a specific trading institution, for example, a bank or to a broker authorized to represent specific traders. Because trading can be conducted by anyone using the terminal, a system of passwords assigned to authorized terminal traders is preferably used to prevent unauthorized traders from trading on the system.

Any one authorized trader is authorized only to conduct specific types of traders on behalf of specific institutions. Brokers are limited to representing their clients. Institutions are limited to representing themselves, or their branches or authorized clients as their agents. Additional levels of security can be provided by limiting the dollar volume that any one individual can trade or by limiting other aspects of a trader's capabilities. The password and security system is administered by the regional administration center which is also responsible for investigating any regional breaches of security.

Upon logging on, and responding to questions desired to update events, see FIG. 2, block 40, the trader is presented with a top level menu as shown in FIG. 3A. The top level menu comprises a window 35 which shares screen space with a market display 36 and an alerts window 38. The top level menu includes a list of plural menu options 32 each having an adjacent text description 34. Initially, an order entry option 33 is highlighted on the bank terminal screen. As is known in the art, a trader can select the highlighted keywork by pressing the [ENTER] key on the terminal keyboard, and can highlight other keywords by moving [Up-Arrow] or [Down-Arrow] keys on the keyboard.

Using the options, the trader can either survey information about the trading market, enter an order, or log off system. For example, to log off the system, the trader may highlight the "Logout" option of FIG. 3A and press the [ENTER] key, thereby triggering a trader terminal disconnection procedure. Alternatively, a logout command may be entered on the command line.

When surveying information using the "Products," "Currencies," "Reports," "Transaction-Summaries," and "Futures-Strips" options, the central computer transmits information and statistics concerning trades that have benn conducted, including current bids and current offers, to the local bank computer which in turn transmits the desired information to the bank terminal. These information-display functions are described in detail below.

## 1. Report Generation

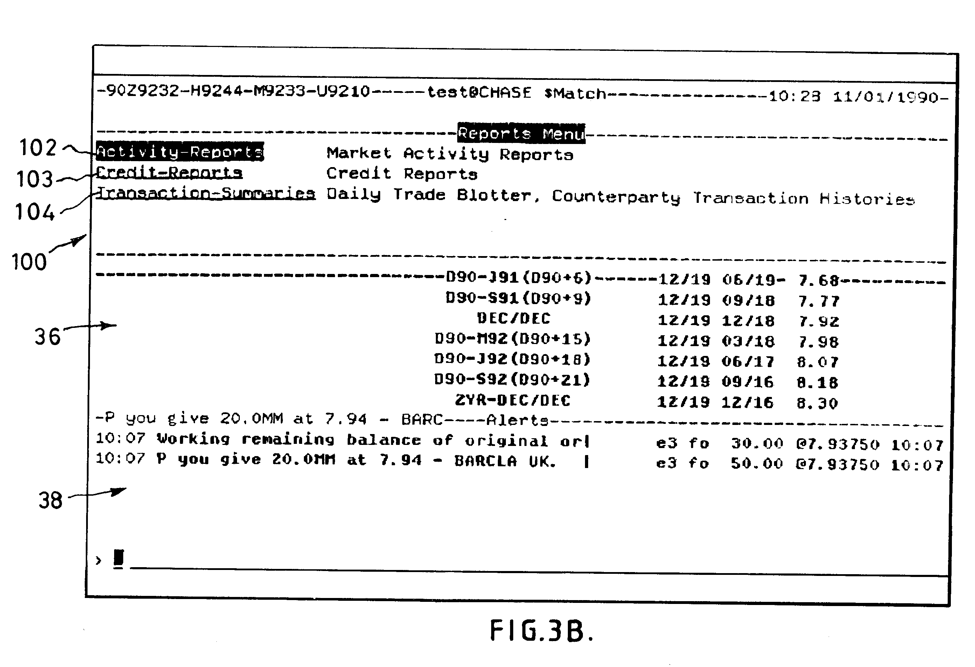

To generate reports, the trader selects the "Reports" option from the top level menu, causing the system to display the reports menu 100 of FIG. 3B. Since the reports menu is relatively short, a large portion of the market display 36 is visible, conceptually lying in the background of the reports menu. The alerts window 38 always retains the same size as shown in FIG. 3A. The reports menu includes an "Activity-Reports" option 102, a "Credit-Reports" option 103 and a "Transaction-Summaries" option 104. As is known in the art, the menus of FIGS. 3A and 3B operate in a hierarchical fashion so that the trader may move between successively more detailled menus until the desired function is displayed.

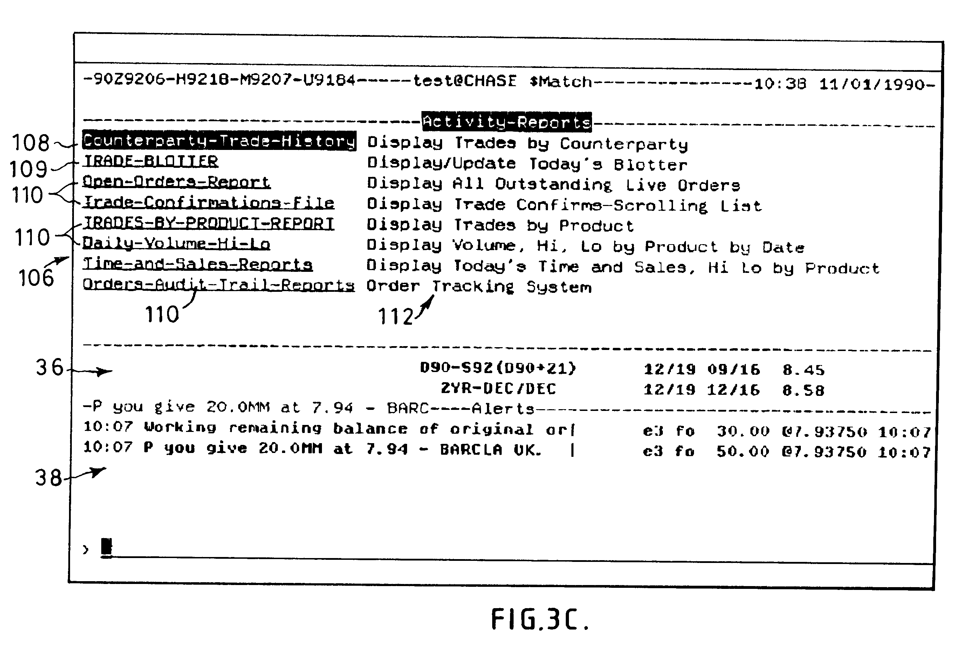

Thus, when a trader selects the "Activity-Reports" option of FIG. 3B, an activity reports menu 106 of FIG. 3C is displayed. The activity reports menu includes a "Counterparty-Trade-History" option 108 and plural other report options 110. Each of the options 108, 110 includes and adjacent text description 112 which explains the function of the option. The activity reports menu lies at the lowest level of the reports menu hierarchy, i.e., each of the options 108, 110 will cause direct display of the selected report without display of further menus.

For example, if the trader selects the "Counterparty-Trade-History" option, a counterparty trade history window 114 is displayed above the alerts window 38. The trade history window includes a counterparty prompt line 116, a product prompt line 118, a header area 120, and a data display area 122. The system positions a screen cursor at a prompt space 124 after the counterparty prompt line. After the trader responds to prompts 116, 118 by typing appropriate data on the keyboard, the system displays responsive data in display area 122. Reports generated by options 110 operate in similar fashion. The counterparty trade history window may also be displayed by selecting the "Transaction-Summaries" option 104 using the reports window display of FIG. 3B.

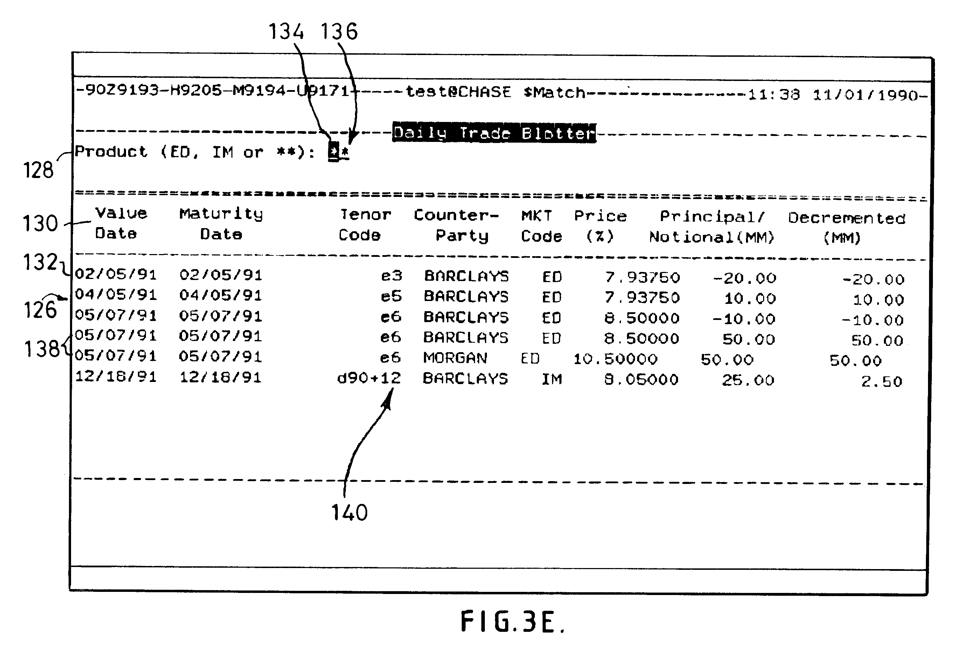

Referring to FIG. 3C, if the trader selects the "TRADE-BLOTTER" option 109, the system displays a daily trade blotter 126 of FIG. 3E. The trade blotter acts as a running log of all trades completed by the trader. The trade blotter includes a product prompt line 128, a header area 130, and a data display area 132. The system positions the screen cursor 134 in a prompt space 136 after the product prompt line. After the trader enters characters representing a product, such as "ED" for "Eurodollars," "IM" for "interest rate swaps," or "**" for "all products," the sytem displays appropriate trade data in display area 132. Each line 138 of the display area represents one completed transaction. Each line includes data fields for the value date of the transaction, its maturity date, its type (designated by a shortand tenor code 140), the name of the counterparty, a code for the market in which the transaction occured, the price of the transaction, the principal amount in millions of dollars (or other denomination for other currencies), and the principal amount decremented from the credit line, if the credit line is affected by the transaction. Thus the trade blotter provides a trader with an overview of each transaction completed during the trading day, including trades done at the institution but not on the system of the invention.

Preferably the trade blotter data resides on the local bank computers. This arrangement precludes the need to communicate blotter data to and from the central computer.

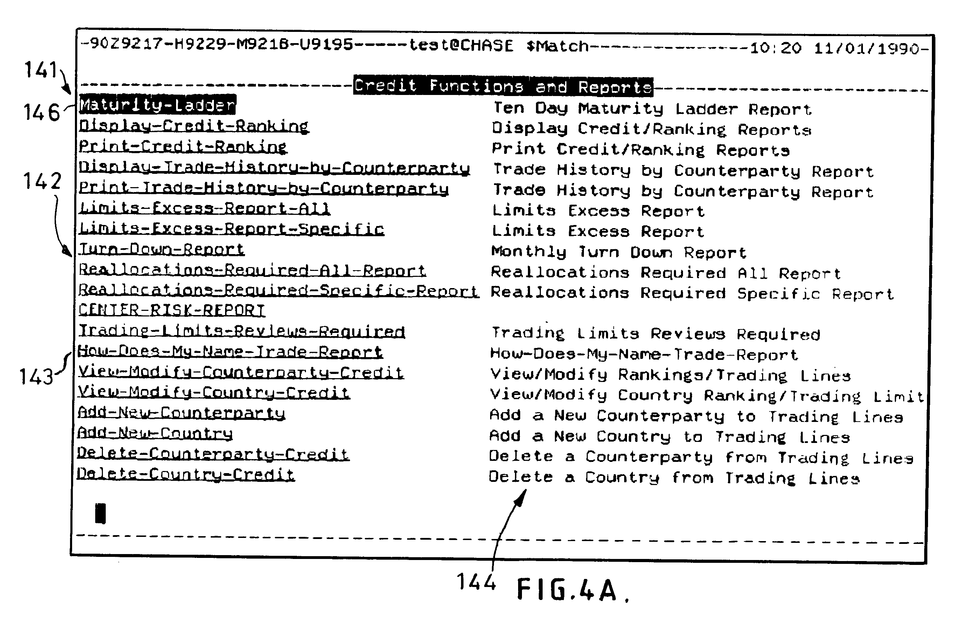

Referring again to FIG. 3B, if the trader selects the "Credit-Reports" option 103, the system displays a credit functions and reports menu 141 shown in FIG. 4A. The credit functions menu includes a list of options 142, each having an adjacent text description 144 which explains the operation of the option. The credit functions menu is a lowest-level menu in the sense that selecting any option 142 causes the sytem to immediately display an appropriate report, rather than displaying another menu.

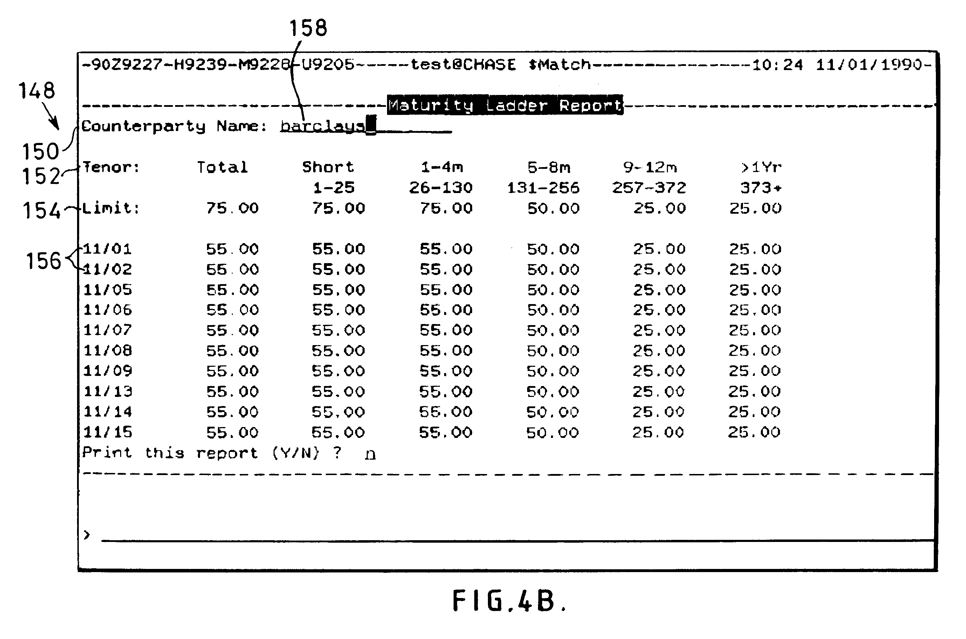

For example, if the trader selects the "Maturity-Ladder" option 146, the system displays a maturity ladder display 148 shown in FIG. 4B. The maturity ladder display includes a counterparty prompt line 150, a tenor header line 152, a limit header 154, and plural data display lines 156.

The credit functions menu further includes a "How Does My Name trade" option 143. If a trader selects this option, the central computer will display an anonymous average of all credit ratings offered to the requesting bank by all other banks. To accomplish this, the central computer communicates the requesting bank's identity, or the identify of his client or institution, to all local bank computers, and requests a credit rating from each local bank computer. The local bank computers query their credit databases and respond with a credit rating. The central computer accumulates the responses and communicates the averages credit rating to the requesting bank.

Thus, the "How Does My Name Trade" option permits a bank to determine his credit status in the entire market without compromising the confidentially of the local credit databases, enabling the bank to quickly determine his creditworthiness as the market changes. In another embodiment, the feature also provides an aggregate credit line as well as a credit rating.

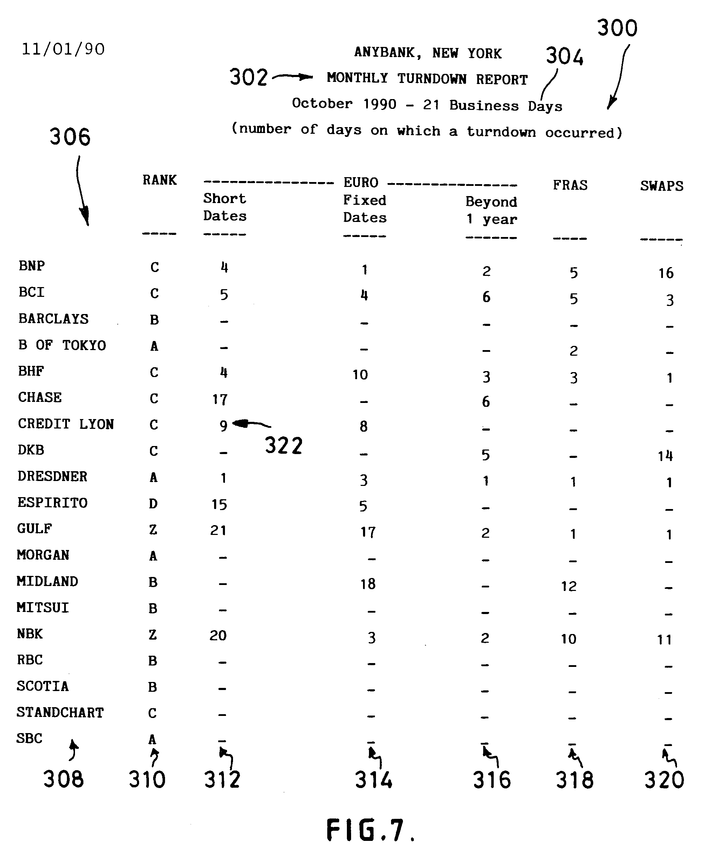

On a monthly basis the system generates a Turndown Report for each subscriber. As shown in Fig. 7, the Turndown Report 300 includes a header area 302 with a day count line 304 showing the number of trading days in the month reported. A table 306 in the report includes a bank name column 308 which lists each institution with which the subscriber bank trades. A rank column 310 indicates the alphabetic credit filter rank assigned to each bank in the bank name column. A plurality of product columns 312, 314, 316, 318, 320 indicate the number of turndowns which occured for a given product and a given bank. Thus, by choosing a bank name in the bank name column and reading across the table to a product, the subscriber can determine the number of times it "turned down" or refused credit to the bank for a product. For example, the number "9" at reference numeral 322 means that the subscriber turned down Credit Lyonnais nine times in eurodeposit short date products. The report enables a subscriber to determine whether it should re-evaluate its credit rankings for the named banks, since a change in rank will often affect the number of turndowns.

## 2. Products Information

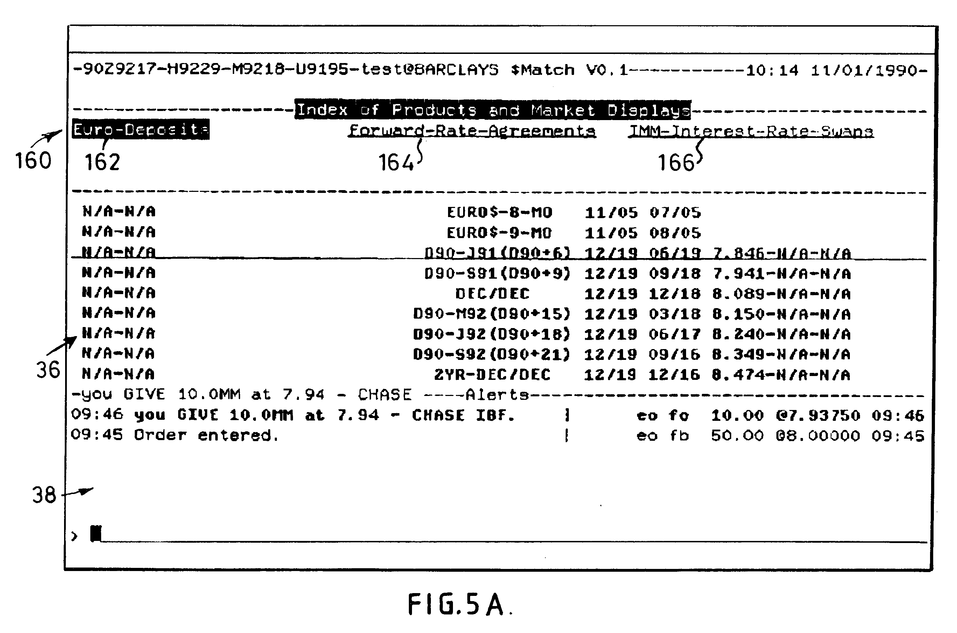

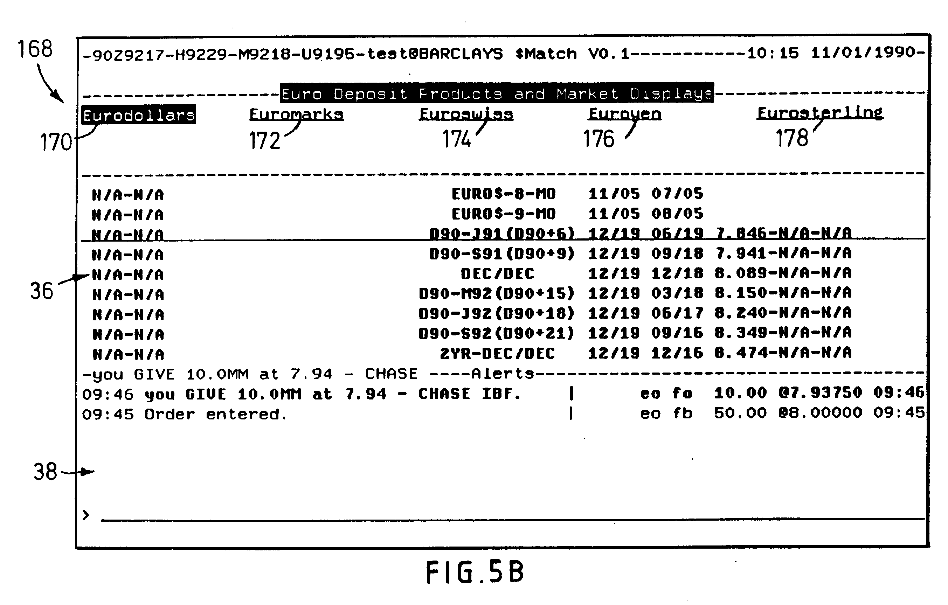

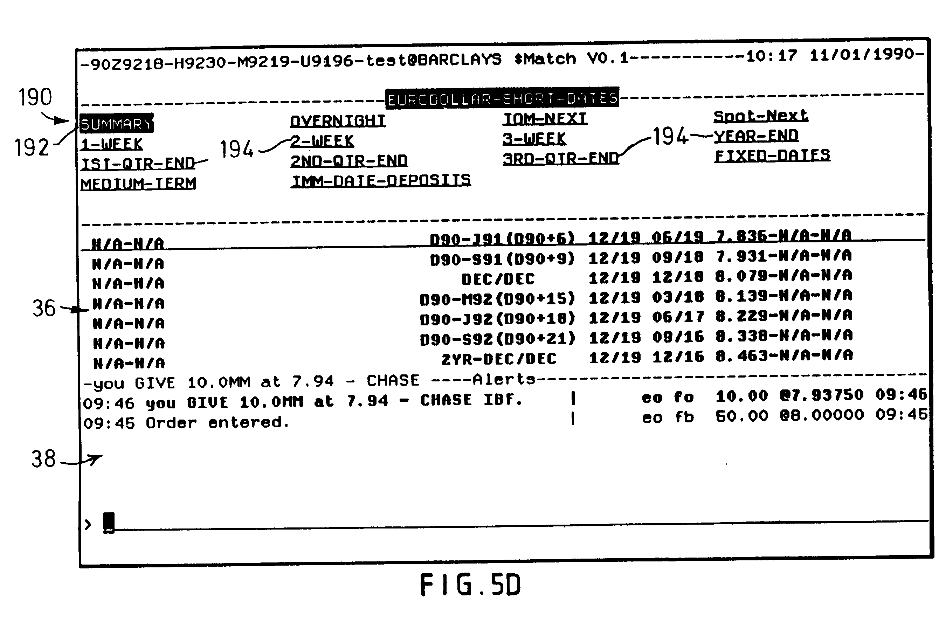

Referring to FIG. 3A, if the trader selects the "Products" option 32c from the top level menu, an index of products menu 160 is displayed, as shown in FIG. 5A. The products menu includes a euro-deposits option 162, a forward-rate-agreements (FRAs) option 164, and an IMM-interest rate swaps option 166. Because the products menu is relatively short, a large portion of the market display 36 is visible beneath the product menu, and the entire alert window 38 is visible.

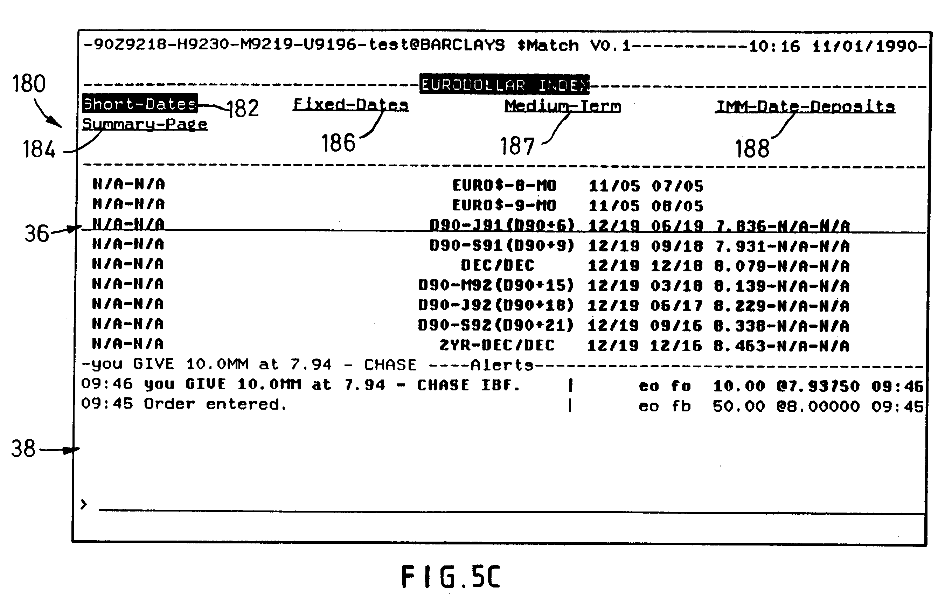

If the trader selects the euro-deposits option from the products menu, a euro-deposit products menu 168 replaces the products menu. The market display area 36 and the alert window 38 remain visible. The euro-deposit products menu includes options to select different currencies on deposit in offshore banks, including eurodollars using option 170, and other currencies, accessed for example by a euromark option 172, a euroswiss option 174, a euroyen option 176, and a eurosterling option 178. Other currency options are contemplated. Selecting each option 170-178 triggers display of a different report. For example, if the trader chooses the eurodollars option 170, the system displays a eurodollar index menu 180 as shown in FIG. 5C. The eurodollar index menu is displayed in the same screen area as the eurodeposit products menu, such that the market display area 36 and the alerts window 38 remain visible. The eurodollar index menu includes a short-dates option 182, a summary-page option 186, and fixed-dates, medium-term, and IMM-date-deposits options respectively labeled 186, 187, and 188.

If the trader selects the short-dates option, the system displays a eurodollar short-dates menu 190. The short-dates menu includes a summary option 192 and plural other options 194, each of which generates a separate report display. A portion of the market display 36 and the entire alerts window 38 remain visible during display of the short-dates menu.

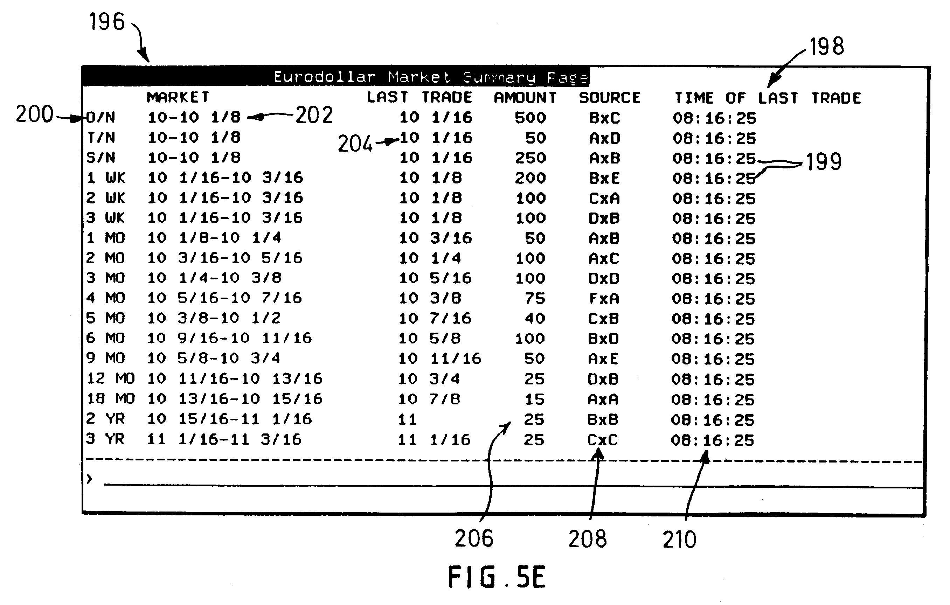

If the trader selects the summary option 192, the system displays a eurodollar short-dates summary report 196 as shown in FIG. 5E. The report includes a header line 198 containing labels for columns of data and plural data lines 199. Each of the data lines includes a market deposit type field 200 which indicates the maturity term of the deposit, a market rate field 202, a trade rate field 204, a trade amount field 206, a source field 208, and a time field 210. The first of top data line always shows the best order currently in the market. The source field 208 is formatted using the credit rating letter designations discussed in detail below. For example, when the data "BxC" is displayed in the source field, the data reflects a deposit bid by a B-rated bank and offered by a C-rated bank.

Summary reports, also called summary pages, are provided for each product tradable on the system. Each page is dynamically logically linked to the product, so that the data on the page is dynamically updated as orders are entered. The logical link also permits quick entry of orders through a "point and shoot" process. The trader can move the cursor to or highlight an order on the summary page display and press a trading key. In response, the sytem displays an order entry form corresponding to the selected order. The trader then can change order parameters and enter an order by pressing a single key. This feature permits extremely fast response to a changing market, since a trader can immediately bid against the best offer displayed and vice versa.

Thus, as is obvious to one ordinary skill in the art, the menus 160, 168, 180, and 190 operate as a hierarchical series, enabling the trader to display more detailed information as the hierarchy is traversed.

### 3. Order Entry

During order entry, as discussed below, preferably a variety of parameters can be keyed in concerning particular types of currencies or instruments, price ranges or active participants, to allow the trader to survey only the information desired.

The trader can place either a firm order or a soft order. The order can be either a bid or an offer. If the trader places a firm order, block 42 indicates that the institution represented by the trader is ready to execute a trade in the amount and rate of the bid or offer upon a match in an amount and rate.

Preferably, to enter an order on the trading system, the trader may input values for the following parameters: (a) whether the order is a bid or an offer, which is preferably done by pressing a function key; (b) which product the order is entered for, e.g., fed funds, eurodollars, etc.; (c) the currency of the order; (d) the length of the term or tenure of the order; (e) the maturity date of the order; (f) the amount of the funds to be negotiated; (g) the interest rate at which the funds are offered or bidded; (h) the expiration time for the order; and (i) the minimum amount for which an order is acceptable. Additional parameters can be provided if necessary to suit the requirements of any particular market. Alternatively, the parameters may be determined as a default depending on the cursor position. Alternate methods of input may supply many of the aforementioned parameters. For example, pressing the "DO" key when an item is selected will cause the system to automatically presume a counteroffer, and fill in the appropriate parameters for that counteroffer.

In voice brokerage operations, each of the above parameters is vocally communicated between the broker and the parties. In the present invention, a shorthand language comprising a plurality of tenor codes is used to designate instrument parameters. For example, the tenor code "e3" is used to designate spot-3-month transactions in the Eurodollar market. Similarly, "e6" designates spot-6-month eurodollars, "e9" means spot-9-month eurodollars, etc. Complex contract transactions such as forward rate agreements and IMM interest rate swaps are also simplified through use of shorthand codes. A complete list of shorthand codes interpreted by the system appears in the "Forms & Menus" module of Appendix A beginning at page 448.

Entry of a shorthand code may be used to cause the system to display a market display page for orders in the market represented by the shorthand code. However, to enter an order, further keystrokes are required, as discussed below.

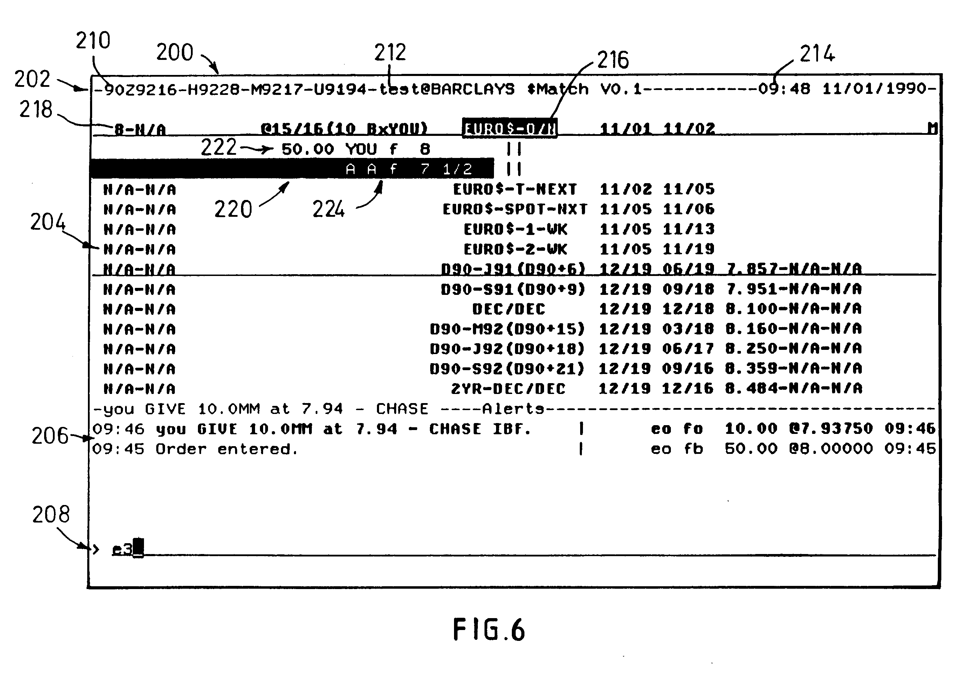

To begin order entry and trading, the trader presses a bid or offer key, or selects the "Order-Entry" keyword 33 from the menu of FIG. 3A. In one embodiment, a market display 200 of FIG. 6 is then displayed. The market display comprises a header area 202, a market data window 204, an alerts window 206, and a prompt line 208. The header area contains contract numbers 210 as known in the art, an identifier 212 which is the name of the trading bank, and a timestamp 214. Immediately below the header area a market name 216 appears which indicates the selected market in which orders will be entered. In the example of FIG. 6 the market name "EURO$-O/N" is short title for the Eurodollars overnight market. Line 218 displays the last completed market transaction in a shorthand format.

In the market data window, bids appear on the left side of the window and offers appear on the right. This window configuration is adjustable per trade via a setup option. In the market data window of FIG. 6, only two bids are displayed in area 220. A first bid 222, appearing in the shorthand form "50.00 YOU f 8," indicates that the trader has entered a firm bid to borrow $50 million at 8 percent. "50.00" means $50 million in overnight Eurodollars, "YOU" means the bid was made by the trader viewing the display, "f" indicates a firm bid, and "8" is the rate. In contrast, a second bid 224, written as "A A of 7 1/2," indicates that a competing bid is in the market from another bank. The amount is not shown to preserve confidentiallity. The "A A" designation indicates that the bank and its sovereign are rated "A" by the trader viewing the display. This rating could be different on different bank terminals, as discussed in Section 4 below. The "f 7 1/2" label indicates a firm bid at a rate of 7 1/2 percent.

The alerts window includes one alert message per line, each line including a timestamp, a text line, and a shorthand description of the order related to the text.

The second bid is shown highlighted in FIG. 6. If desired, to enter an order the trader may position a highlighted cursor over an existing bid or offer and press a trade or dealing key which may be labeled [Do].

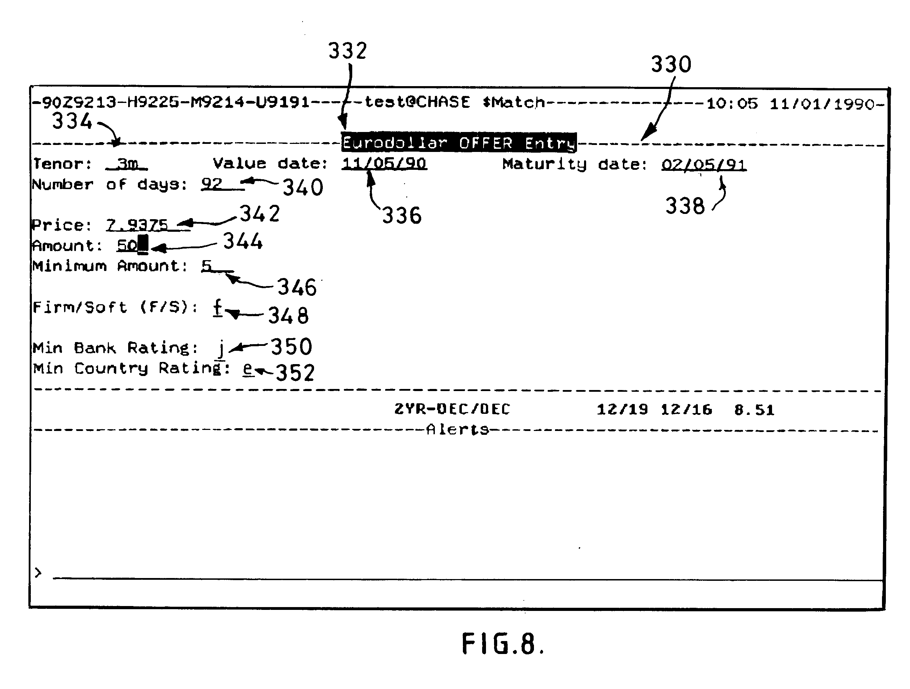

Each order line is logically linked to an order entry form which enables individual entry of each order parameter. This logical link permits entry of orders through a "point and shoot" procedure implemented in program process steps as follows. The trader positions the cursor on an entered order, highlighting the order, and presses a single key. In response, the system displays an order entry form corresponding to the highlighted order; the form displays all parameters of the chosen order. FIG. 8 shows an exemplary order form 330 having a title line 332 showing the product and order type, i.e. an order for eurodollars. The form has a plurality of parameter fields 334 to 352 for numeric and alphabetic order parameters; the values shown in the parameter fields in FIG. 8 are exemplary and are user-changable. A tenor field 334 indicates the term of the product. A value date field 336 shows the date from which the trade begins. A maturity date field 338 shows the date on which the order matures. A price field 342 shows the price or yield of the order. An amount field 344 shows the quantity ordered; the 50 represents $50 million. A minimum field 346 shows the minimum amount which will be traded to complete a transaction. A firm/soft field 348 shows an alphabetic character which may be "f" if the order is firm and "s" if soft; the default is firm or "f". A bank field 350 shows an alphabetic credit qualifier which a counterparty must meet or exceed for a transaction to occur. A country field 352 shows an alphabetic credit qualifier which a country of the counterparty must meet or exceed for a transaction to occur. The bank rating form enables traders to establish minimum credit qualifiers. For example, entry of a "B" in the bank field indicates that an order is good to banks rated B or better.

The trader may change any or all of the displayed parameters by moving the cursor to the parameter and entering new data. A dealing key is then pressed to enter the changed order, or to accept without change the order shown on the form.

After entering an order, the order parameter values are transmitted by the local bank computer to the central computer. Upon receiving an order from a remote terminal, the computer executes two mains operations discussed below: credit filtering and order matching.

## 4. Credit Filtering

First, the computer broadcasts the entered order, including identidfication of the bank making order, to the credit controller of each local bank computer connected to the central computer. Each local bank computer filters the order information through a credit data file and displays the order on all local bank terminals coupled to the local bank computer. However, the name of the originating bank is <u>not</u> displayed. Instead, an alphabetic character is displayed, which represents a credit rating assigned to the originating bank by the credit filtering system. A detailed description of this process follows.

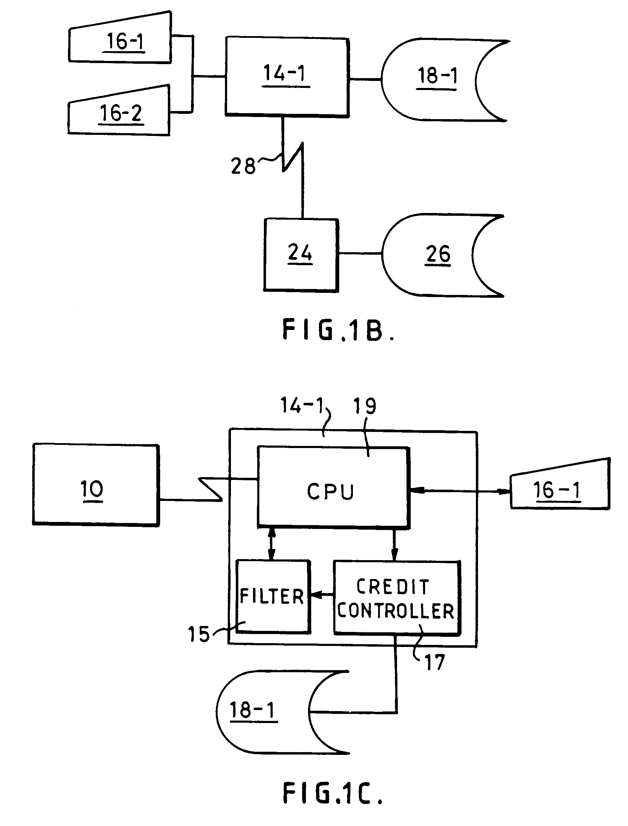

Referring now to FIG. 1B, each local bank computer 14-1 contains a credit file or credit database on a mass storage device 18-1 coupled to and accessible by the local bank computer. As discussed above, the credit file may reside on mass storage device 26. The credit file contains a credit rating and a credit line (also called a dealing line) for each institution with which the trader will trade. This credit line may differ according to maturity (see table below), however the alphabetical label is determined by the total line. This is a default value and may be changed by the user. Preferably a series of term lines are provided for different tenors (market instruments), and each market can be associated with a different credit line.

As shown in FIG. 1C, the local bank computer preferably includes a CPU 19 coupled to bank terminals and to the central computer. Logically, credit filter 15 receives order data from the CPU and filters the data before returning filtered data to the CPU for display. A credit controller 17 is provided which can be modify the operational characteristics of the credit filter. The credit controller is coupled to a the credit file to enable controlled communication of confidential credit data to the filter and the CPU. Logically, the credit controller acts as an electronic fiduciary which supervises communication between the sensitive credit databases, bank terminals, and the central computer. Data going to or from the communications network, the local bank credit databases, and banks or traders, all must pass through the credit controller, which operates to shield sensitive credit information and/or network information (such as bank names) in all directions.

The credit rating is preferably an alphabetical character indicating the general credit worthiness of the corresponding institution. Several separate credit ratings may be maintained, including institutional ratings, center ratings, and sovereign ratings. In the cash market, the traders are typically banks. A bank may have branches or subsidiaries in foreign countries. However, they all share the same sovereign risk. It is preferred that the credit file not only maintain a credit rating for each bank, but also for each sovereign and center. Accordingly, if a substantial amount has been borrowed by two or three banks, the bank can protect itself from too much risk with that particular sovereign by establishing a credit rating for the sovereign which is less than the total combined credit ratings for each of the sovereign's banks.

By way of example, the codes of Table 1 may be used for bank ratings, and the codes of Table 2 may be used for center and sovereign ratings. Depending on the number of lines maintained by a bank, a different number of line levels may be used.

## Table 1 -- Sample Credit Line Rankings -- Banks

| Code Character | Gross Limit (M$) |
| --- | --- |
| A | 100+ |
| B | 75-99 |
| C | 50-74 |
| D | 25-49 |
| E | 10-24 |
| F | Up to 10 |
| N | No trade allowed |
| Z | No credit facility |
| * | No credit line |

## Table 2 -- Credit Line Rankings -- Sovereigns

| Code Character | Gross Limit (M$) |
| --- | --- |
| A | 5,000 |
| B | 4,000 |
| C | 3,000 |
| D | 2,000 |
| E | 1,000 |
| N | No trade allowed |
| Z | No credit facility |
| * | No credit line |

Thus, the credit filtering process involves a check against the bank's credit line and against the sovereign's credit line.

The credit file preferably contains a credit rating for the country in which the bank is located, known as the center rating. This allows a bank to avoid trading with embargoed countries or countries with particularly unstable currencies. By checking credit ratings for bank, sovereign, and country, and credit lines for bank and sovereign, anonymity can be maintained without exposing banks to excessive risk.

Further, the credit files includes a credit line (or dealing line) amount, given above in the second column of Tables 1 and 2, which is a numerical value indicating the amount of credit which the bank maintaining that credit file is willing to extend to the institution. The sovereign and center credit lines are cumulative; thus, if five banks of a soverign rated E are trading, the bank is willing to collectivity extend a maximum of $1 billion in credit to all five banks.

Each subscriber bank maintains its own credit ratings and credit lines. Thus, different traders working for different banks will see different credit ratings displayed on the system even if the counterparty is the same. This feature provides dynamic credit filtering which permits each bank to establish its own ratings of other banks independent of the central computer. Because each bank's credit file is maintained at a remote local bank computer, the credit file is easily maintained by the trading institution, and confidentially is easily maintained as well. Preferably, the bank is completely responsible for maintaining its own credit file and the only other access to this information is through the central computer for the trade matching system. Each credit file can be different for each bank because the bank creates the data which is stored in its own credit file. A bank cannot access another bank's credit file through the central computer. In the system of the invention, no access path is provided from one bank to another, but only from a remote terminal to the central computer. Preferably, a bank's credit data is protected, even from access by the central and regional administrators.

Credit files can be formatted in a variety of ways. In a cash market, instruments are typically overnight, term or off-balance sheet. A credit file can be arranged so that a bidder can arrow from its term credit line to supplement its overnight credit line or its off-balance sheet credit line if the bank desires.

In addition, borrowing can be done to the cash market credit line from credit lines for other types of markets, for example, securities or commodities.

In the system of the invention, when a trader makes an offer, the offer will include a minimum credit rating and an amount. A matching bid will be found for that offer only if the filtered bid meets or exceeds the credit rating established in the offer. After a match is made, the central computer accesses the credit file of the offering institution and determines wether the source of has sufficient funds in its dealing line to satisfy the terms of the offer. If so, the trade is executed.

The integral distributed credit check allows trades to be executed much more quickly than with conventional manual credit checking methods and, at the same time, maintains credit data security. Concurrently with trade execution and posting to both parties to the transaction, the credit file of the offeror is updated to reflect that credit has been extended to the counterparty to extent of the executed trade. Since there is no direct communication path between the central computer and the local computer credit database, confidentially is preserved.

5. Order Matching

Next, as illustrated in Figure 2, the central computer begins to search for matching orders, block 44. If the order is a bid the central computer searches for matching offers and vice versa. The central computer finds a matching order by finding a counterorder of the same instrument for the same tenure, the same maturity rate, the same or greater amount, the same interest rate, etc. The central computer looks first for firm orders beginning with the first placed order which is still pending.

If an exact match for order is found, block 46, the computer then proceeds to perform a credit line availability check, block 48. The goal of the check of block 48 is to determine whether the amount of the bid is within the available credit in the credit line for the source of the bid. Thus, this check is entirely different from the credit filtering feature discussed above. Credit filtering establishes a baseline credit rating below which a trade is not possible. In contrast, the check of block 48 ensures that a counterparty has an adequate credit facility to consummate the transaction.

When the system reaches the test of block 48, partial credit approval for the counterparty has already been granted, since a trade match requires that the counterparties have matching or better alphabetic credit ratings, as determined by the credit filter. However, in the time since the counterparty's order passed through the credit filter, the counterparty may have executed trades which extinguish its credit line availability. Therefore, the system must determine wether the counterparty is presently able to consummate the trade.

If the bid passes this secondary credit line test as indicated in block 50, then the offeror is willing to extend credit to the bidder and the central computer executes the trade, block 52. After the trade has been executed, the trade is posted to both the offeror and the bidder, block 54, including transmission of the names of the counterparties. Thus, only after the trade is executed does either party known with whom the trade has been executed.

A failsafe feature is provided, as shown in the flowchart of FIG. 2B, to ensure that the trader acknowledges the trade, thus avoiding accidental transactions. Process steps and program means provide a process in which, after a trade is completed, block 70, a hard copy confirmation is printed at the bank computer, block 72. An alert message, preferably including commands to cause an audible beep or other signal, is then transmitted to the trader terminal, requesting the trader to confirm the trade, as shown in block 74. To confirm the trade, as tested in block 78, the trader moves the cursor to the alert line and presses [RETURN], causing the system to display a second confirmation message. If no response is received by the central computer, after expiration of a timer set in block 76, control is passed to block 82. The central computer then notifies a system staff member, who telephones the trader to verbally confirm the trade. After confirmation or resolution of the failure to confirm, the failsafe process ends at block 86.

After posting the trade, the matching process has ended for the affected orders, and the process returns, block 55, to find matches for the other orders still pending. As is known in the art, the process of FIG. 2 may be re-triggered or re-entered when a new order is entered by a trader.

If the offeror's credit file shows that the bidder's credit with the offeror is insufficient to support the trade, as tested in blocks 48 and 50, and the institution has been pre-designated as approved by the bank or institution granting credit, the central computer will pass control to the step of block 56 and ask the bidder if it will permit its identity to be revealed to the offeror. This inquiry is accomplished by writing an appropriate message in the alerts window and receiving a user response through the keyboard.

If the bidder agrees, then the central computer will reveal the indentity of the bidder to the offeror and ask whether the offeror is willing to override the credit restraints, block 56. If the offeror is willing to override the credit restraints, as tested in block 58, then the trade is executed notwithstanding the insufficient credit. Authority to override the credit line can be limited to certain individuals at the bank's terminal using the password system.

In the event that the bidder has insufficient credit with the offeror, block 56, and no credit override is permitted, block 58, because of the bidder's unwillingness to reveal its identity, or the offeror's unwillingness to extend additional credit, the match is abandoned, and the process matches the order with a different order, block 44. The matching process for a pending order is never finished until a trade is posted for the order, the order is canceled, or the order expires.

If no perfect firm match is found for any particular order then an imperfect match is sought, block 60. An imperfect match is a match for the same instrument with a differing price or term. The tolerances within which an imperfect match will be accepted by the central computer are determined at the regional administration centers or at the central administration center and can be varied to suit the circumstances of the market at the time.

If an imperfect match is found, i.e., a match with parameter values within predefined tolerances, then the central computer will ask the trader who placed the order whether the order can be altered to match the imperfect match, block 62. In the case of an offer and a bid, both the offeror and bidder can be asked if they are willing to alter their offer and bid, respectively, or the system can be constructed so that only one party to a potential transaction is asked. If either party alters its order suitably, then the imperfect match becomes a perfect firm match, block 64, and the central computer proceeds to perform a credit check as explained above. If the orders are not altered enough to form a perfect match, then the process starts over with matching the order with another order.

If no perfect match and no imperfect match can be found, the central computer will search for a soft order to match with the firm order, block 66. If a soft order can be found, then the trader which has entered the soft order is informed, through an alert message, that a firm order which matches its soft order has been entered and asked whether it is willing to make its soft order firm, block 68. If it does so, then a firm match has been created, and the computer proceeds to perform a credit check, block 48. If it does not wish to firm, after a fixed time period elapses, the soft order is canceled by the central computer and the trader is appropriately notified. If no matching orders can be found, either firm or soft, then the computer will attend to other tasks and attempt later to find a perfect match. Since orders are constantly being entered expiring, a matching order can often be found a few minutes even if none were available at the time the order was first entered.

Except for a Query, the system will not accept a soft order which already has a firm match. The trader will be forced to enter a firm order or none at all. It no firm order exists in the system to match a softer order, it is processed in essentially the same way. The process begins with entering the soft order, block 42, and receiving the soft order at the central computer. Next, the soft order is compared to other orders, beginning with firm orders, for a match, block 44. When a matching firm order is found for the soft order, block 66, the trader is asked whether it is willing to firm its soft order, block 68, so that a trade can be executed. If a match is found between two soft orders, then both parties are asked whether they would be willing to firm their soft orders. Trades are executed only with perfect matches between two firm orders and only each counterparty passes the other's credit check. Once the orders are firmed, they are treated as if they had been firm from the outset, except that the timestamp will be adjusted to reflect the current time. Imperfect matches among soft orders are treated in substantially the same way as imperfect matches between firm orders. When found, an alteration of one or both of the orders is requested so that the match will become perfect.

## 6. Supplemental Operations

In addition to the responsibilities set forth above, the regional administration centers provide other processing services to the system traders. For example, the centers can be respond to political or business news by changing parameters on the system or by suspending operations pending intervention in the market by the Federal Reserve Board.

Several other options are also available to traders of the system, as discussed below.

Different types of orders can be entered. For example, a conditional order upon which the entire amount of the order must be fulfilled or the order is withdrawn, can be entered by a trader. The central computer will then attempt to match the order with enough matching orders to fill the entire amount.

In a combined order, several different orders for different types instruments or for the same instrument with different parameters are entered. The order is combined in that all orders must be filled or the trade cannot be executed.

Alternative orders are also possible in which either one order or another, but not both, must be filled.

Analytical applications may be provided as well to allow a trader to obtain general statistics about the state of the market, and conduct interpolations and calculations based on current trading activity as an alternative to simply displaying market information.

The present invention also offers a query mode in which the trader can check credit available to him in the market for a particular order. The query mode enables the trader to determine wether a match would occur, and sufficient credit would be available, if the trader actually placed a particular order in the market. The order is entered into the trading system as a soft and normal credit filtering and checking is done. The order is entered soft to enable counterparties to see the order on the market display so they know that they are being "tested".

After the query is executed, the system will display matching orders, but will cancel the entered soft order after a predetermined amount of time known as an expiration period. This cancellation feature prevents banks from entering perpetually soft orders merely to examine the state of the market. When a soft query order expires, an alert message is written to the alert window of the market display.

A trader is permitted to cancel any orders at any time or to change the data in its own credit file.

The system includes means for the trading off a data "strip" derived from the data feed 11 coupled to the central computer. Using the strip, traders have real-time access to market prices in the IMM or other markets. The system permits entry of orders having parameters, such as price, defined in relation to the strip. For example, an order can be entered with a price defined as the strip price plus a fixed quantity. Using such a parameter, a trader can cause the order value to fluctuate according to changes in the strip data as the market day progresses. Such orders are referred to as having a strip basis, and can be entered with any spread to the strip, including a price over or under the strip. In practice, the data feed can be inaccurate, so such relative orders are ordinarily entered as soft orders. When a match is generated, the orders become "dealable," and the system generates an alert message on the bank terminal screen. The trader then must change the order to a firm order to consummate a trade, using the process discussed above in connection with blocks 66 and 68 of FIG. 2A. If a predetermined time (such as 60 seconds) expires without the order being made firm, the soft order is removed from the board. In response to the alert message, the trader can also change the order from strip basis to actual basis by moving the cursor to the alert line and changing parameters.

### D. Conclusions

A variety of modifications and alterations may be performed to the present invention without departing from its spirit and scope. Thus, the scope of protection is not limited to the description above but rather is defined by the appended claims. firm, the soft order is removed from the board . In response to the alert message, the trader can also change the order from strip basis to actual basis by moving the cursor to the alert line and changing parameters.

In the invention as set out in claim 1, the credit filter means may be logically interposed between the plural credit databases, the plural bank terminals, and the central computer, the credit filter means including electronic fiduciary means for preventing unauthorized access to the credit databases. The credit database may comprise a credit file controlled from and located at the local bank computer; another example is where the credit database comprises a credit file coupled to a remote computer coupled to an accessible by the local bank computer. The credit filtering means may include display means, coupled to and responsive to the order broadcast means, for displaying a credit rating in response to an order broadcast from the order broadcast means.

In the method as set out in claim 10 step (e) may include the further substep of communicating an identification of the matched orders to the remote terminals only after the trade has been executed. Step (d) may include the further substeps of

(i) accessing a credit database coupled to the local bank computer,

(ii) retrieving a credit rating corresponding to the order, and

(iii) communicating the credit rating to bank terminals connected to the local bank computer. Step (e) may further include the substep of communicating the amount of the trade to the bank terminals only after the trade has been executed. Step (e) may further include the substep of modifying the credit database at the local bank computers to reflect the amount of the executed trade. Step (e) may further include the substep of matching orders to the earliest entered order for which the parameter values are substantially identical.

Step (e) may further include the substep of testing whether there is a corresponding order having parameter values substantially identical to the matched bid and offer, and if not, matching orders for which the parameter values of overall limit are substantially similar within a predefined tolerance, through the substeps of

(i) communicating the parameters of the matched order to the bank terminals,

(ii) requesting alteration of order parameters to be substantially identical, and

(iii) executing a trade corresponding to the altered orders if the order parameters are altered to be substantially identical.

Step (a) may include the further substep of designating an entered order as firm or soft, in which case step (e) may include the further substep of testing whether a soft order has been matched, and if so,

(i) requesting the bank terminal originating a soft order to transform the soft order into a firm order, and

(ii) executing a trade only if the matched orders are both firm. Step (e) may further include the substeps of:

(i) requesting the remote terminal originating a matched order to permit execution of a trade when the credit database indicates that an insufficient credit line is available, and

(ii) executing the trade upon receipt of communication permitting execution of the trade. Step (a) may further include the further step of permitting the trader to select credit query option, and upon selection,

(i) communicating the bank's identity, to all the local bank computers;

(ii) requesting a credit rating from each local bank computer;

(iii) causing each local bank computer to query the credit database for a credit rating corresponding to the bank;

(iv) communicating a credit rating to the central computer;

(v) computing an average credit rating;

(vi) communicating the average credit rating to the bank; and

(vi) computing and communicating an anonymous aggregate of total credit lines. Step (e) may further include a failsafe substep for conforming executed trades, including the following substeps:

(i) communicating an alert message from the central computer to a bank terminal;

(ii) waiting a predetermined time for a response from the bank terminal;

(iii) in response to input from the bank terminal, communicating a second confirmation message to the bank terminal; and

(iv) if no response is received by the central computer after the predetermined time, causing human communication to a trader at the bank terminal.

The invention also envisages a computer programme article of manufacture for matching currency transaction orders wherein each order is defined by specific variable parameters and wherein orders are entered at any one of a plurality of remote bank terminals each connected to one of plural local bank computers, the article of manufacture comprising a plurality of program instructions configured to execute program steps comprising:

(a) entering orders and parameter values at the bank terminals

(b) receiving the orders and the parameter values from the bank terminals at a central computer,

(c) broadcasting the orders and the parameter values from the central computer to the local bank computers;

(d) filtering the orders at the local bank computers and communicating a credit rating to the bank terminals;

(e) matching orders at the central computer for which the parameter values are substantially similar, including the substep of conducting a credit line availability check by accessing a credit database to determine whether an order has sufficient credit line available, and if so, executing a trade corresponding to the matched orders if the credit is sufficient.

## Claims

1. A system for matching orders, including bids and offers, each order being defined by specific variable parameters, the system comprising:

a plurality of remote bank terminals for entering bids and offers and their respective parameters:

a plurality of local bank computers, each bank computer being coupled to a communication network, each bank terminal being coupled to one of the bank computers;

a central computer coupled to the communication network, the central computer including:

order matching means for matching corresponding orders based on the similarity of the parameter values; and

order broadcast means for communicating oder parameters to the local bank computers using the communication network;

characterized by plural credit databases , each database being proximate to and associated with one of the bank computers, each database containing credit data for plural potential sources of orders; and

credit filter means in each local bank computer for receiving order data and for accessing the credit database to obtain credit data relating to the source of the order. The central computer further comprising credit availability check means for determining whether the source of an order has available credit.

2. A system as claimed in Claim 1, the central computer further including trade execution means, responsively coupled to the credit availability check means, for executing a trade corresponding to matched orders.

3. A system as claimed in Claim 2, further including alert means in the central computer for communicating to the local bank computers that a trade has been executed and parameters of the trade.

4. A system as claimed in claim 2 or claim 3, further including transaction posting means responsive to execution of a trade for communicating to a local bank computer, the source of the bid for which the trade has been executed.

5. A system as claimed in any one of claims 1 to 4, wherein the credit database comprises a credit rating and a credit line for each source of orders, the credit rating comprising an alphanumeric character representing the creditworthiness of the order source, the credit line comprising an integer representing the maximum amount of credit to be extended to the order source, the integer being a user-changeable default.

6. A system as claimed in any one of claims 1 to 5, wherein the variable parameters for an order include an order minimum credit rating, and wherein the order matching means includes comparison means for comparing an order minimum credit rating to a credit rating in the credit database and for matching the order only if the credit rating is greater than the order minimum credit rating.

7. A system as claimed in any one of claims 1 to 6, wherein the credit line further includes an overnight credit line for application to overnight orders, a term credit line for application to term orders, and a plurality of other credit lines corresponding to other markets.

8. A system as claimed in claim 7, wherein the credit line comprises a distributive factor for allowing a portion of the overall credit line to be distributed to the term credit line and for allowing a potion of the term credit line to be distributed to the overall credit line or vice versa.

9. A system as claimed in any one of claims 1 to 8, wherein the local bank computers further include query means for requesting a display of outstanding bids, and wherein the central computer further includes query response means for transmitting to the bank terminals order descriptions for outstanding orders for which the bank terminals will extend credit.

10. A computer data processing method for matching currency transaction orders wherein each order is defined by specific variable parameters and wherein orders are entered at any one of a plurality of remote bank terminals each connected to one of plural local bank computers, comprising the steps of;
    (a) entering orders and parameter values at the bank terminals;
    (b) receiving the orders and the parameter values from the bank terminals at a central computer;
    (c) broadcasting the orders and the parameter values from the central computer to the local bank computers and matching orders at the central computer for which the parameter values are substantially similar, characterized by the further step of filtering the orders at the local bank computers and communicating a credit rating to the central computer, the order matching step including the substep of conducting a credit line availability check by accessing a credit database to determine whether an order has sufficient credit line available, and if so, executing a trade corresponding to the matched orders if the credit is sufficient.

FIG.1.

FIG.1B.

FIG.1C.

FIG.2A.

FAILSAFE

EXECUTE TRADE  70

PRINT HARD-COPY CONFIRMATION  72

SEND TRADE ALERT  74

SET TIMER  76

CONFIRM REC'D ?  78

TIMEOUT ?  80

Y

Y

STOP

STAFF CONTACT TRADER  82

86

RESOLVE  84

FIG.2B.

-90Z9216-H9228-M9217-U9194-----test@BARCLAYS $Match-------------09:50 11/01/1990-

------------------------------- Top Level Menu     Welcome to MoneyMatch ------------------

Order-Entry             Order Forms

Credit-Controller      View, Modify Credit Files and Reports

Products                 Select Products and Market Displays

Currencies             Select Currencies and Market Displays

Reports                  Reports for Market Activity, Transaction Review and Credit

Transaction-Summaries   Daily Trade Blotter, Counterparty Transaction Histories

Futures-Strips           View Compound Futures Strips

Logout                   Logout of MoneyMatch

----------------------------------------------------------------------------------------

                             D90-S92(D90+21)       12/19 09/16   8.36

                              2YR-DEC/DEC         12/19 12/16   8.48

-----------------------------------------Alerts----------------------------------------

> ▮

FIG.3A.

-90Z9232-H9244-M9233-U9210------test@CHASE $Match------------------10:23 11/01/1990-

---------------------------------------------Reports Menu----------------------------------------
Activity-Reports        Market Activity Reports
Credit-Reports          Credit Reports
Transaction-Summaries   Daily Trade Blotter, Counterparty Transaction Histories


----------------------------------------------------------------------------------------------
----------------------------------------------D90-J91(D90+6)------12/19 06/19- 7.68----------
                                D90-S91(D90+9)      12/19 09/18  7.77
                                  DEC/DEC           12/19 12/18  7.92
                                D90-M92(D90+15)     12/19 03/18  7.98
                                D90-J92(D90+18)     12/19 06/17  8.07
                                D90-S92(D90+21)     12/19 09/16  8.18
                                ZYR-DEC/DEC         12/19 12/16  8.30
-P you give 20.0MM at 7.94 - BARC----Alerts---------------------------------------------
10:07 Working remaining balance of original or|    e3 fo  30.00 @7.93750 10:07
10:07 P you give 20.0MM at 7.94 - BARCLA UK.  |    e3 fo  50.00 @7.93750 10:07


> █ _____

FIG.3B.

EP 0 512 702 A2

----------------------------------------Activity-Reports-------------------------------------

Counterparty-Trade-History Display Trades by Counterparty
TRADE-BLOTTER Display/Update Today's Blotter
Open-Orders-Report Display All Outstanding Live Orders
Trade-Confirmations-File Display Trade Confirms-Scrolling List
TRADES-BY-PRODUCT-REPORT Display Trades by Product
Daily-Volume-Hi-Lo Display Volume, Hi, Lo by Product by Date
Time-and-Sales-Reports Display Today's Time and Sales, Hi Lo by Product
Orders-Audit-Trail-Reports Order Tracking System

-------------------------------------------------------------------------------------------

                                      D90-S92(D90+21)      12/19 09/16  8.45
                                      2YR-DEC/DEC          12/19 12/16  8.58
-P you give 20.0MM at 7.94 - BARC----Alerts----------------------------------------------
10:07 Working remaining balance of original or|       e3 fo  30.00 @7.93750 10:07
10:07 P you give 20.0MM at 7.94 - BARCLA UK.  |       e3 fo  50.00 @7.93750 10:07


> ▊

FIG.3C.

EP 0 512 702 A2

```
-90Z9208-H9220-M9209-U9186----test@BARCLAYS $Match------------11:05 11/01/1990-

---------------------------------------Counterparty Trade History----------------------------
Enter Counterparty: chase█
Product (ED, IM or **): **
=================================================================================
   Value     Maturity        Tenor   Counter-   MKT   Price    Principal/  Decremented
   Date      Date            Code     Party     Code   (%)     Notional(MM)  (MM)
---------------------------------------------------------------------------------
02/05/91   02/05/91            e3    CHASE      ED    7.93750    20.00        20.00




------------------------------------------------------------------------------------
10:56 Order entered.                          |       e6  fb   10.00 @8.50000 10:56


>_____
```

FIG.3D.

134 136

```
-90Z9193-H9205-M9194-U9171------test@CHASE $Match-----------------11:38 11/01/1990-

---------------------------------Daily Trade Blotter----------------------------------
Product (ED, IM or **): ∎*

==========================================================================================

 Value      Maturity          Tenor   Counter-   MKT   Price    Principal/     Decremented
 Date       Date              Code     Party     Code   (%)     Notional(MM)     (MM)
-----------------------------------------------------------------------------------------
 02/05/91   02/05/91            e3     BARCLAYS    ED    7.93750    -20.00         -20.00
 04/05/91   04/05/91            e5     BARCLAYS    ED    7.93750     10.00          10.00
 05/07/91   05/07/91            e6     BARCLAYS    ED    8.50000    -10.00         -10.00
 05/07/91   05/07/91            e6     BARCLAYS    ED    8.50000     50.00          50.00
 05/07/91   05/07/91            e6     MORGAN      ED   10.50000     50.00          50.00
 12/18/91   12/18/91          d90+12   BARCLAYS    IM    8.05000     25.00           2.50


----------------------------------------------------------------------------------------
```

128  130  132  126  138

140

## FIG.3E.

-----------------------------------Credit Functions and Reports------------------------------------

| | |
|---|---|
| Maturity-Ladder | Ten Day Maturity Ladder Report |
| Display-Credit-Ranking | Display Credit/Ranking Reports |
| Print-Credit-Ranking | Print Credit/Ranking Reports |
| Display-Trade-History-by-Counterparty | Trade History by Counterparty Report |
| Print-Trade-History-by-Counterparty | Trade History by Counterparty Report |
| Limits-Excess-Report-All | Limits Excess Report |
| Limits-Excess-Report-Specific | Limits Excess Report |
| Turn-Down-Report | Monthly Turn Down Report |
| Reallocations-Required-All-Report | Reallocations Required All Report |
| Reallocations-Required-Specific-Report | Reallocations Required Specific Report |
| CENTER-RISK-REPORT | |
| Trading-Limits-Reviews-Required | Trading Limits Reviews Required |
| How-Does-My-Name-Trade-Report | How-Does-My-Name-Trade-Report |
| View-Modify-Counterparty-Credit | View/Modify Rankings/Trading Lines |
| View-Modify-Country-Credit | View/Modify Country Ranking/Trading Limit |
| Add-New-Counterparty | Add a New Counterparty to Trading Lines |
| Add-New-Country | Add a New Country to Trading Lines |
| Delete-Counterparty-Credit | Delete a Counterparty from Trading Lines |
| Delete-Country-Credit | Delete a Country from Trading Lines |

FIG.4A.

EP 0 512 702 A2

```
-90Z9227-H9239-M9228-U9205-------test@CHASE $Match------------------10:24 11/01/1990-

----------------------------------[Maturity Ladder Report]----------------------------------
Counterparty Name: barclays█_____

Tenor:      Total       Short       1-4m        5-8m        9-12m       >1Yr
                        1-25        26-130      131-256     257-372     373+
Limit:      75.00       75.00       75.00       50.00       25.00       25.00

11/01       55.00       55.00       55.00       50.00       25.00       25.00
11/02       55.00       55.00       55.00       50.00       25.00       25.00
11/05       55.00       55.00       55.00       50.00       25.00       25.00
11/06       55.00       55.00       55.00       50.00       25.00       25.00
11/07       55.00       55.00       55.00       50.00       25.00       25.00
11/08       55.00       55.00       55.00       50.00       25.00       25.00
11/09       55.00       55.00       55.00       50.00       25.00       25.00
11/13       55.00       55.00       55.00       50.00       25.00       25.00
11/14       55.00       55.00       55.00       50.00       25.00       25.00
11/15       55.00       55.00       55.00       50.00       25.00       25.00
Print this report (Y/N) ?   n
------------------------------------------------------------------------------------------

> _____
```

FIG.4B.

```
-90Z9217-H9229-M9218-U9195-test@BARCLAYS $Match V0.1-----------10:14 11/01/1990-

----------------------------Index of Products and Market Displays------------------------
Euro-Deposits              Forward-Rate-Agreements      IMM-Interest-Rate-Swaps
162                        164                          166

-----------------------------------------------------------------------------------------
N/A-N/A                                     EURO$-8-MO    11/05 07/05
N/A-N/A                                     EURO$-9-MO    11/05 08/05
N/A-N/A                                     D90-J91(D90+6)  12/19 06/19 7.846-N/A-N/A
N/A-N/A                                     D90-S91(D90+9)  12/19 09/18 7.941-N/A-N/A
N/A-N/A                                     DEC/DEC       12/19 12/18 8.089-N/A-N/A
N/A-N/A                                     D90-M92(D90+15) 12/19 03/18 8.150-N/A-N/A
N/A-N/A                                     D90-J92(D90+18) 12/19 06/17 8.240-N/A-N/A
N/A-N/A                                     D90-S92(D90+21) 12/19 09/16 8.349-N/A-N/A
N/A-N/A                                     2YR-DEC/DEC   12/19 12/16 8.474-N/A-N/A
-you GIVE 10.0MM at 7.94 - CHASE ----Alerts-----------------------------------------------
09:46 you GIVE 10.0MM at 7.94 - CHASE IBF.        |       eo fo  10.00 @7.93750 09:46
09:45 Order entered.                              |       eo fb  50.00 @8.00000 09:45




> █
```

160

36

38

FIG.5A.

EP 0 512 702 A2

EP 0 512 702 A2

```
-90Z9217-H9229-M9218-U9195-test@BARCLAYS $Match VO.1-----------10:15 11/01/1990-

------------------------------Euro Deposit Products and Market Displays---------------
Eurodollars        Euromarks          Euroswiss          Euroyen           Eurosterling

-----------------------------------------------------------------------------------
N/A-N/A                            EURO$-8-MO    11/05 07/05
N/A-N/A                            EURO$-9-MO    11/05 08/05
N/A-N/A                            D90-J91(D90+6)  12/19 06/19 7.846-N/A-N/A
N/A-N/A                            D90-S91(D90+9)  12/19 09/18 7.941-N/A-N/A
N/A-N/A                            DEC/DEC         12/19 12/18 8.089-N/A-N/A
N/A-N/A                            D90-M92(D90+15) 12/19 03/18 8.150-N/A-N/A
N/A-N/A                            D90-J92(D90+18) 12/19 06/17 8.240-N/A-N/A
N/A-N/A                            D90-S92(D90+21) 12/19 09/16 8.349-N/A-N/A
N/A-N/A                            2YR-DEC/DEC     12/19 12/16 8.474-N/A-N/A
-you GIVE 10.0MM at 7.94 - CHASE ----Alerts---------------------------------------
09:46 you GIVE 10.0MM at 7.94 - CHASE IBF.    |      eo fo  10.00 @7.93750 09:46
09:45 Order entered.                          |      eo fb  50.00 @8.00000 09:45


>  _____
```

## FIG.5B

EP 0 512 702 A2

```
-90Z9218-H9230-M9219-U9196-test@BARCLAYS $Match VO.1-----------10:16 11/01/1990-
180
        -------------------------------------EURODOLLAR INDEX-------------------------------
       Short-Dates   182    Fixed-Dates         Medium-Term          IMM-Date-Deposits
184    Summary-Page               186               187                     188
        --------------------------------------------------------------------------------
        N/A-N/A                          EURO$-8-MO   11/05 07/05
        N/A-N/A                          EURO$-9-MO   11/05 08/05
36      N/A-N/A                          D90-J91(D90+6)  12/19 06/19 7.836-N/A-N/A
        N/A-N/A                          D90-S91(D90+9)  12/19 09/18 7.931-N/A-N/A
        N/A-N/A                          DEC/DEC         12/19 12/18 8.079-N/A-N/A
        N/A-N/A                          D90-M92(D90+15) 12/19 03/18 8.139-N/A-N/A
        N/A-N/A                          D90-J92(D90+18) 12/19 06/17 8.229-N/A-N/A
        N/A-N/A                          D90-S92(D90+21) 12/19 09/16 8.338-N/A-N/A
        N/A-N/A                          2YR-DEC/DEC     12/19 12/16 8.463-N/A-N/A
        -you GIVE 10.0MM at 7.94 - CHASE ----Alerts------------------------------------
        09:46 you GIVE 10.0MM at 7.94 - CHASE IBF.     |      eo fo  10.00 @7.93750 09:46
        09:45 Order entered.                           |      eo fb  50.00 @8.00000 09:45
38
        > _____
```

FIG.5C

EP 0 512 702 A2

```
-90Z9218-H9230-M9219-U9196-test@BARCLAYS $Match V0.1-----------10:17 11/01/1990-

------------------------------EURODOLLAR-SHORT-DATES-----------------------------
SUMMARY              OVERNIGHT            TOM-NEXT             Spot-Next
1-WEEK               2-WEEK               3-WEEK               YEAR-END
1ST-QTR-END          2ND-QTR-END          3RD-QTR-END          FIXED-DATES
MEDIUM-TERM          IMM-DATE-DEPOSITS

--------------------------------------------------------------------------------

N/A-N/A                        D90-J91(D90+6)  12/19 06/19 7.836-N/A-N/A
N/A-N/A                        D90-S91(D90+9)  12/19 09/18 7.931-N/A-N/A
N/A-N/A                            DEC/DEC     12/19 12/18 8.079-N/A-N/A
N/A-N/A                        D90-M92(D90+15) 12/19 03/18 8.139-N/A-N/A
N/A-N/A                        D90-J92(D90+18) 12/19 06/17 8.229-N/A-N/A
N/A-N/A                        D90-S92(D90+21) 12/19 09/16 8.338-N/A-N/A
N/A-N/A                          2YR-DEC/DEC   12/19 12/16 8.463-N/A-N/A
-you GIVE 10.0MM at 7.94 - CHASE ----Alerts-------------------------------------
09:46 you GIVE 10.0MM at 7.94 - CHASE IBF.      |     eo fo  10.00 @7.93750 09:46
09:45 Order entered.                            |     eo fb  50.00 @8.00000 09:45




>
```

## FIG.5D

EP 0 512 702 A2

196

198

200

202

204

199

| | Eurodollar Market Summary Page | | | | |
|---|---|---|---|---|---|
| | MARKET | LAST TRADE | AMOUNT | SOURCE | TIME OF LAST TRADE |
| O/N | 10-10 1/8 | 10 1/16 | 500 | BxC | 08:16:25 |
| T/N | 10-10 1/8 | 10 1/16 | 50 | AxD | 08:16:25 |
| S/N | 10-10 1/8 | 10 1/16 | 250 | AxB | 08:16:25 |
| 1 WK | 10 1/16-10 3/16 | 10 1/8 | 200 | BxE | 08:16:25 |
| 2 WK | 10 1/16-10 3/16 | 10 1/8 | 100 | CxA | 08:16:25 |
| 3 WK | 10 1/16-10 3/16 | 10 1/8 | 100 | DxB | 08:16:25 |
| 1 MO | 10 1/8-10 1/4 | 10 3/16 | 50 | AxB | 08:16:25 |
| 2 MO | 10 3/16-10 5/16 | 10 1/4 | 100 | AxC | 08:16:25 |
| 3 MO | 10 1/4-10 3/8 | 10 5/16 | 100 | DxD | 08:16:25 |
| 4 MO | 10 5/16-10 7/16 | 10 3/8 | 75 | FxA | 08:16:25 |
| 5 MO | 10 3/8-10 1/2 | 10 7/16 | 40 | CxB | 08:16:25 |
| 6 MO | 10 9/16-10 11/16 | 10 5/8 | 100 | BxD | 08:16:25 |
| 9 MO | 10 5/8-10 3/4 | 10 11/16 | 50 | AxE | 08:16:25 |
| 12 MO | 10 11/16-10 13/16 | 10 3/4 | 25 | DxB | 08:16:25 |
| 18 MO | 10 13/16-10 15/16 | 10 7/8 | 15 | AxA | 08:16:25 |
| 2 YR | 10 15/16-11 1/16 | 11 | 25 | BxB | 08:16:25 |
| 3 YR | 11 1/16-11 3/16 | 11 1/16 | 25 | CxC | 08:16:25 |

>

206   208   210

FIG.5E

EP 0 512 702 A2

```
-90Z9216-H9228-M9217-U9194-test@BARCLAYS  $Match  VO.1-----------09:48 11/01/1990-
 8-N/A              @15/16(10 BxYOU)      EURO$-0/N       11/01 11/02                M
             222→ 50.00 YOU f  8              ||
                          A A f  7 1/2        ||
  N/A-N/A                           EURO$-T-NEXT   11/02 11/05
  N/A-N/A        220        224     EURO$-SPOT-NXT 11/05 11/06
  N/A-N/A                             EURO$-1-WK   11/05 11/13
  N/A-N/A                             EURO$-2-WK   11/05 11/19
  N/A-N/A                           D90-J91(D90+6) 12/19 06/19 7.857-N/A-N/A
  N/A-N/A                           D90-S91(D90+9) 12/19 09/18 7.951-N/A-N/A
  N/A-N/A                             DEC/DEC      12/19 12/18 8.100-N/A-N/A
  N/A-N/A                          D90-M92(D90+15) 12/19 03/18 8.160-N/A-N/A
  N/A-N/A                          D90-J92(D90+18) 12/19 06/17 8.250-N/A-N/A
  N/A-N/A                          D90-S92(D90+21) 12/19 09/16 8.359-N/A-N/A
  N/A-N/A                            2YR-DEC/DEC   12/19 12/16 8.484-N/A-N/A
-you GIVE 10.0MM at 7.94 - CHASE ----Alerts-------------------------------------
09:46 you GIVE 10.0MM at 7.94 - CHASE IBF.     |      eo fo  10.00 @7.93750 09:46
09:45 Order entered.                           |      eo fb  50.00 @8.00000 09:45


> e3█
```

FIG.6

11/01/90

ANYBANK, NEW YORK **300**

302 ⟶ MONTHLY TURNDOWN REPORT **304**

October 1990 - 21 Business Days

(number of days on which a turndown occurred)

**306**

| | RANK | ── EURO ── | | | FRAS | SWAPS |
|---|---|---|---|---|---|---|
| | | Short Dates | Fixed Dates | Beyond 1 year | | |
| | ──── | ───── | ───── | ────── | ──── | ───── |
| BNP | C | 4 | 1 | 2 | 5 | 16 |
| BCI | C | 5 | 4 | 6 | 5 | 3 |
| BARCLAYS | B | – | – | – | – | – |
| B OF TOKYO | A | – | – | – | 2 | – |
| BHF | C | 4 | 10 | 3 | 3 | 1 |
| CHASE | C | 17 | – | 6 | – | – |
| CREDIT LYON | C | 9 ◀ **322** | 8 | – | – | – |
| DKB | C | – | – | 5 | – | 14 |
| DRESDNER | A | 1 | 3 | 1 | 1 | 1 |
| ESPIRITO | D | 15 | 5 | – | – | – |
| GULF | Z | 21 | 17 | 2 | 1 | 1 |
| MORGAN | A | – | – | – | – | – |
| MIDLAND | B | – | 18 | – | 12 | – |
| MITSUI | B | – | – | – | – | – |
| NBK | Z | 20 | 3 | 2 | 10 | 11 |
| RBC | B | – | – | – | – | – |
| SCOTIA | B | – | – | – | – | – |
| STANDCHART | C | – | – | – | – | – |
| SBC | A | – | – | – | – | – |

**308** **310** **312** **314** **316** **318** **320**

# FIG.7.

```
-90Z9213-H9225-M9214-U9191----/--test@CHASE $Match------------/---10:05 11/01/1990-
 334
---------------------------------Eurodollar OFFER Entry------------/---------------------
Tenor: _3m_     Value date: 11/05/90        Maturity date: 02/05/91
Number of days: 92 __                                    338
Price: 7.9375                   336
Amount: 50
Minimum Amount: 5

Firm/Soft (F/S): f

Min Bank Rating: j
Min Country Rating: e
--------------------------------------------------------------------
                        2YR-DEC/DEC        12/19 12/16  8.51
------------------------------------Alerts---------------------------



>  _____
```

FIG.8.